(19) Europäisches Patentamt
European Patent Office
Office européen des brevets

(11) **EP 1 750 088 B1**

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(51) Int Cl.:
***G01B 21/04*** *(2006.01)*

(21) Anmeldenummer: **06015184.2**

(22) Anmeldetag: **21.07.2006**

(54) **Verfahren zum Korrigieren von Führungsfehlern eines Koordinatenmessgerätes**

Method for correcting guidance errors of a coordinate measuring machine

Procédé pour corriger des erreurs de guidage d'un appareil de mesure de coordonnées

(84) Benannte Vertragsstaaten:
**DE FR GB IT**

(30) Priorität: **03.08.2005 DE 102005038454**

(43) Veröffentlichungstag der Anmeldung:
**07.02.2007 Patentblatt 2007/06**

(73) Patentinhaber: **Carl Zeiss Industrielle Messtechnik GmbH**
**73447 Oberkochen (DE)**

(72) Erfinder: **Staaden, Ulrich**
**73431 Aalen (DE)**

(74) Vertreter: **Duhme, Torsten et al**
**Witte, Weller & Partner**
**Patentanwälte**
**Postfach 10 54 62**
**70047 Stuttgart (DE)**

(56) Entgegenhaltungen:
**EP-A1- 1 391 684    EP-A2- 0 684 447**
**DE-A1- 10 214 490**

• **FLORUSSEN G H J ET AL: "Assessing geometrical errors of multi-axis machines by three-dimensional length measurements" MEASUREMENT, INSTITUTE OF MEASUREMENT AND CONTROL. LONDON, GB, Bd. 30, Nr. 4, Dezember 2001 (2001-12), Seiten 241-255, XP004319684 ISSN: 0263-2241**

EP 1 750 088 B1

**Beschreibung**

Die vorliegende Erfindung betrifft ein Verfahren zum Korrigieren von Führungsfehlern einer Maschine, insbesondere eines Koordinatenmessgerätes, mit einem Mess- oder Arbeitskopf, der an einem Verschiebegestell mit zumindest zwei Bewegungsachsen angeordnet ist, mit den Schritten:

-  Verfahren des Verschiebegestells entlang der zumindest zwei Bewegungsachsen und Aufnehmen einer Vielzahl von Messlinien mit einer Vielzahl von Fehlerwerten, die translatorische und rotatorische Führungsfehler entlang der zumindest zwei Bewegungsachsen repräsentieren,

-  Identifizieren einer Bewegungsachse, bei der ein rotatorischer Führungsfehler von einer Querposition des Verschiebegestells abhängt, wobei die Querposition eine Position des Verschiebegestells quer zu der identifizierten Bewegungsachse repräsentiert,

-  Aufnehmen einer ersten und einer zweiten Messlinie für den rotatorischen Führungsfehler entlang der identifizierten Bewegungsachse, wobei das Verschiebegestell eine erste und eine zweite Querposition einnimmt, und

-  Bereitstellen von positionsabhängigen Korrekturwerten für eine Position des Messkopfes in Abhängigkeit von den Messlinien entlang der zumindest zwei Bewegungsachsen, um einen Positionsmesswert des Messkopfes zu korrigieren.

Die Erfindung betrifft ferner eine Maschine, insbesondere ein Koordinatenmessgerät, mit einem Verschiebegestell mit zumindest zwei Bewegungsachsen, mit einem Mess-oder Arbeitskopf, der an dem Verschiebegestell angeordnet ist, und mit einer Auswerteeinheit zum Korrigieren von Führungsfehlern mit einem ersten Speicher, in dem eine Vielzahl von Fehlerwerten gespeichert sind, die translatorische und rotatorische Führungsfehler des Verschiebegestells entlang der zumindest zwei Bewegungsachsen repräsentieren.

Ein solches Verfahren und ein solches Koordinatenmessgerät sind beispielsweise aus US 4,939,678 bekannt.

Koordinatenmessgeräte werden üblicherweise verwendet, um die Objektform eines Messobjekts zu vermessen. Die Koordinatenmessgeräte besitzen einen Messkopf, der mit Hilfe des Verschiebegestells in mehreren Raumrichtungen bewegbar ist. Der Messkopf wird in eine definierte Position bezogen auf einen Messpunkt an dem Messobjekt gebracht. Häufig wird der Messpunkt dabei mit einem Taststift angetastet. Aus der Stellung des Messkopfes im Messvolumen lassen sich dann die Raumkoordinaten des Messpunktes bestimmen.

Typischerweise besitzen Koordinatenmessgeräte Glasmaßstäbe entlang der Bewegungsachsen des Verschiebegestells, um die Position des Messkopfes im Messvolumen zu bestimmen. Die Messgenauigkeit des Koordinatenmessgerätes hängt davon ab, wie genau die Glasmaßstäbe die tatsächliche Position des Messkopfes im Messvolumen wiedergeben. Hier produziert jedes Koordinatenmessgerät auf Grund von Fertigungstoleranzen und auf Grund von thermischen Einflüssen, elastischen Verformungen u.a. individuelle Messfehler, die zu Messunsicherheiten führen. Es ist bekannt, die systematischen Messfehler rechnerisch zu korrigieren oder zumindest zu reduzieren. Dies geschieht, indem man den Messkopf des Koordinatenmessgerätes in einem Kalibriermodus an verschiedene Raumpositionen bewegt und die vom Koordinatenmessgerät gelieferte Raumposition mit Referenzmesswerten vergleicht, die mit einem Kalibriermesswerkzeug, beispielsweise einem Interferometer, aufgenommen werden. Die Differenzen werden als Fehlerwerte in einem Speicher der Auswerteeinrichtung hinterlegt und im Messbetrieb dazu verwendet, die vom Koordinatenmessgerät gelieferten Positionsmesswerte zu korrigieren.

Die Bestimmung der Fehlerwerte erfolgt ursprünglich unter der Annahme, dass die Abweichungen des Koordinatenmessgerätes in einer Bewegungsachse unabhängig von den Abweichungen in einer anderen Bewegungsachse sind. Dabei vernachlässigte man elastische Verformungen des Koordinatenmessgerätes, die von der aktuellen Raumposition des Messkopfes abhängen. Die Aufnahme der Fehlerwerte erfolgte bei einem 3D-Koordinatenmessgerät entlang von 18 Messlinien. Entlang von jeder Bewegungsachse wurden sechs Messlinien mit Fehlerwerten aufgenommen, wobei jede Messlinie einen Freiheitsgrad bzw. Messfehler repräsentiert. Beispielsweise gibt eine Messlinie translatorische Fehlerwerte in y-Richtung an, wenn der Messkopf entlang der x-Achse verfahren wird. Diese Messlinie wird in der Terminologie der Anmelderin als xTy-Messlinie bezeichnet. In gleicher Terminologie beinhaltet die zTx-Messlinie translatorische Fehlerwerte in x-Richtung an, wenn der Messkopf entlang der z-Achse verfahren wird. Außerdem kann sich der Messkopf beim Verfahren entlang einer Bewegungsachse verdrehen, was zu rotatorischen Fehlerwerten führt. In der Terminologie der Anmelderin beinhaltet beispielsweise die zRx-Messlinie rotatorische Fehler (Verdrehung des Messkopfes) um die x-Achse beim Verfahren entlang der z-Bewegungsachse. Die rotatorischen Führungsfehler (Drehwinkel) können nach dem querpositionsunabhängigen Modell in translatorische Fehlerwerte umgerechnet werden.

Eine genauere Darstellung dieser Vorgehensweise zum Korrigieren von Führungsfehlern eines Koordinatenmessgerätes findet sich in US 4,819,195 oder in einem Artikel von K. Busch mit dem Titel "Ein Beitrag zur Bestimmung der Messunsicherheit von Koordinatenmessgeräten", PTB-Bericht PTB-ME-38, 1983, Seite 33 ff.

Die rechnerische Korrektur von Führungsfehlern auf Basis der oben erläuterten 18 Messlinien führt jedoch nicht in allen Fällen zu befriedigenden Ergebnissen, weil sie die ortsabhängigen elastischen Verformungen des Koordinatenmessgerätes nicht berücksichtigt. Daher gibt es eine Reihe von Vorschlägen, um die Korrektur zu verbessern.

Die eingangs genannte US 4,939,678 schlägt vor, zwei oder drei parallele Messlinien entlang solcher Bewegungsachsen aufzunehmen, bei denen die tatsächlichen Abweichungen von der Querposition des Messkopfes abhängen. Bei einem Koordinatenmessgerät in Brückenbauweise sollen dies die Fehlerwerte entlang der y-Bewegungsachse sein, da diese von der Querposition des Messkopfes an der Traverse abhängen. US 4,939,678 schlägt weiter vor, die jeweils korrespondierenden Fehlerwerte (gleiche y-Positionen) der Messlinien zu verwenden, um die Koeffizienten von linearen Näherungsgleichungen zu berechnen. Dementsprechend muss die Anzahl der zueinander parallelen Messlinien gleich der Anzahl der unbekannten Koeffizienten der Näherungsgleichungen gewählt werden. Für jede Messposition entlang der parallelen Messlinien werden die Koeffizienten einer Näherungsgleichung bestimmt. Sämtliche Koeffizienten werden für die spätere Korrektur von Positionsmesswerten in einem Speicher bereitgestellt. Diese Vorgehensweise erfordert die Bestimmung und Abspeicherung einer Vielzahl von Koeffizienten in Ergänzung zu den Fehlerwerten der "herkömmlichen" 18 Messlinien. Außerdem müssen die Fehlerwerte der parallelen Messlinien an identischen Längspositionen aufgenommen werden, beispielsweise also an identischen y-Positionen für das Ausführungsbeispiel eines Koordinatenmessgerätes in Brückenbauweise. Dieses Erfordernis erschwert die Aufnahme der Messlinien.

DE 102 14 490 A1 schlägt vor, die Fehlerwerte, die entlang von parallelen Messlinien aufgenommen werden, so zu modifizieren, dass die Fehlerwerte entlang der zweiten und weiteren parallelen Messlinien nur noch relative Abweichungen bezogen auf die erste Messlinie derselben Bewegungsrichtung sind. In diesem Fall werden also die Fehlerwerte entlang einer ersten Messlinie und relative Abweichungen von diesen Fehlerwerten entlang von parallelen zweiten Messlinien abgespeichert. Die Korrektur von Positionsmesswerten erfolgt unter Verwendung der Fehlerwerte der ersten Messlinie und der dazu relativen Abweichungen in Querrichtung. In diesem Fall ist die Anzahl der bereitgestellten Fehlerwerte erhöht und die Korrektur erfordert die Berücksichtigung der zusätzlichen relativen Fehlerwerte.

In DE 195 18 268 A1 und der prioritätsgleichen EP 0 684 447 A2 ist vorgeschlagen, das elastische Verhalten des Koordinatenmessgerätes mit Hilfe einer Deformationsmatrix mathematisch nachzubilden. Mit diesem Verfahren ist prinzipell eine hohe Korrekturqualität möglich, es erfordert jedoch einen hohen Mess- und Rechenaufwand, um die Koeffizienten der Deformationsmatrix zu bestimmen.

Vor diesem Hintergrund ist es eine Aufgabe der vorliegenden Erfindung, ein alternatives Verfahren anzugeben, mit dem sich die Führungsfehler eines Koordinatenmessgerätes unter Berücksichtigung von elastischen Verformungen korrigieren lassen. Es ist insbesondere eine Aufgabe der vorliegenden Erfindung, ein solches Verfahren anzugeben, das sich einfach und kostengünstig implementieren lässt.

Gemäß einem Aspekt der vorliegenden Erfindung wird diese Aufgabe durch ein Verfahren der eingangs genannten Art gelöst, bei dem unter Verwendung der ersten Messlinie eine erste Vielzahl elastischer Biegewinkel des Verschiebegestells bestimmt wird, bei dem die erste Vielzahl elastischer Biegewinkel von den Fehlerwerten der ersten Messlinie subtrahiert wird, um eine erste modifizierte Messlinie zu erhalten, die querpositionsunabhängige Fehlerwerte entlang der identifizierten Bewegungsachse repräsentiert, und bei dem die positionsabhängigen Korrekturwerte in Abhängigkeit von den Fehlerwerten entlang der ersten modifizierten Messlinie bereitgestellt werden.

Gemäß einem weiteren Aspekt der Erfindung wird diese Aufgabe durch ein Koordinatenmessgerät der eingangs genannten Art gelöst, bei dem die Fehlerwerte zumindest eine erste modifizierte Messlinie repräsentieren, die von einer Querposition des Verschiebegestells unabhängig ist, sowie eine erste Vielzahl elastischer Biegewinkel, die eine Querpositionsabhängigkeit der ersten modifizierten Messlinie repräsentieren, wobei die Auswerteeinheit dazu ausgebildet ist, positionsabhängige Korrekturwerte für eine Position des Messkopfes in Abhängigkeit derjenigen Fehlerwerte, die die erste modifizierte Messlinie repräsentieren, bereitzustellen, um einen Positionswert des Messkopfes zu korrigieren.

Die Erfindung basiert auf der Erkenntnis, dass die elastischen Deformationen eines Koordinatenmessgerätes dazu führen, dass die Axiome, auf denen das herkömmliche (querpositionsunabhängige oder "starre") Korrekturmodell beruht, verletzt sind. Insbesondere trifft die Annahme, dass rotatorische Führungsfehler unabhängig von der Querposition des Messkopfes sind, auf Grund der elastischen Verformungen nicht zu. Basierend auf dieser Erkenntnis geht die vorliegende Erfindung den Weg, die bereitgestellten Messlinien so zu modifizieren, dass die modifizierten Messlinien querpositionsunabhängige Fehlerwerte repräsentieren.

Etwas genauer basiert die vorliegende Erfindung auf der Erkenntnis, dass die elastischen Biegungen des Koordinatenmessgerätes vor allem den rotatorischen Führungsfehlern entlang einer Bewegungsachse, die senkrecht zu der Biegung steht, überlagert sind. Das neue Verfahren bestimmt die elastischen Biegewinkel und bestimmt im Anschluss daran eine modifizierte Messlinie, die von den elastischen Biegewinkeln befreit ist. Man erhält damit eine modifizierte Messlinie, die nur noch die rotatorischen Führungsfehler entlang der betroffenen Bewegungsachse beschreibt. Basierend auf einer solchen Messlinie kann die "herkömmliche" Führungsfehlerkorrektur, die auf einem querpositionsunabhängigem Modell beruht, erfolgreich angewendet werden. Vorteilhafterweise erfolgt zusätzlich eine Vorkorrektur der Positionsmesswerte, um die durch die elastische Verformung verursachten Positionsabweichungen ebenfalls zu berücksichtigen.

In dem neuen Koordinatenmessgerät sind dementsprechend die Fehlerwerte der modifizierten Messlinie abgelegt. Diese Fehlerwerte ersetzen die entsprechenden Fehlerwerte der nicht-modifizierten Messlinien, die bei herkömmlichen Koordinatenmessgeräten abgespeichert sind. Die Fehlerkorrektur kann jedoch nach der bekannten Vorgehensweise auf Basis des "starren" Modells erfolgen.

Das neue Verfahren und das neue Koordinatenmessgerät besitzen den Vorteil, dass die "herkömmliche" Vorgehensweise weitgehend beibehalten wird. Die Korrektur erfolgt lediglich anhand von modifizierten Fehlerwerten. In Ergänzung dazu ist vorteilhafterweise eine Vorkorrektur unter Verwendung der isolierten Biegewinkel vorgesehen. Das neue Verfahren kann dadurch sehr einfach und kostengünstig implementiert werden und auch bei älteren Koordinatenmessgeräten einfach nachgerüstet werden. Darüber hinaus sind die Anforderungen an Speicherplatz und Rechenaufwand relativ gering. Auch die Aufnahme der Fehlerwerte erfolgt in an sich bekannter Weise.

Insgesamt stellt die vorliegende Erfindung damit eine einfache und kostengünstige Alternative zur Verfügung, mit der sich Führungsfehler eines Koordinatenmessgerätes exakter korrigieren lassen. Der systematisch Fehler der herkömmlichen Vorgehensweise wird eliminiert, ohne das zugrundeliegende Modell zu verwerfen.

Die oben genannte Aufgabe ist vollständig gelöst.

In einer bevorzugten Ausgestaltung der Erfindung wird die erste Vielzahl elastischer Biegewinkel mit Hilfe eines Polynoms approximiert, wobei Polynomkoeffizienten des Polynoms unter Verwendung einer Minimumapproximation aus den Fehlerwerten entlang der ersten Messlinie bestimmt werden. Vorzugsweise wird ein Polynom zweiten Grades verwendet. Ebenfalls bevorzugt ist es, als Minimumapproximation eine Gaußapproximation (Minimierung der Summe der Fehlerquadrate) zu verwenden.

Die Approximation der Biegewinkel mit Hilfe eines solchen Polynoms hat sich als sehr einfache und wirkungsvolle Vorgehensweise erwiesen, um die Vielzahl elastischer Biegewinkel entlang der ersten Messlinie zu quantifizieren.

In einer weiteren Ausgestaltung wird ferner eine zweite Vielzahl elastischer Biegewinkel unter Verwendung der zweiten Messlinie bestimmt, die zweite Vielzahl elastischer Biegewinkel wird von den Fehlerwerten der zweiten Messlinie subtrahiert, um eine zweite modifizierte Messlinie zu erhalten, und die positionsabhängigen Korrekturwerte werden in Abhängigkeit von der ersten und der zweiten modifizierten Messlinie bereitgestellt.

Dieses Ausgestaltung ermöglicht eine genauere Vorkorrektur und damit eine noch bessere Anpassung der Fehlerkorrektur an die Voraussetzungen des querpositionsunabhängigen Grundmodells.

In einer weiteren Ausgestaltung wird unter Verwendung der ersten und zweiten modifizierten Messlinie eine mittlere modifizierte Messlinie bestimmt und die positionsabhängigen Korrekturwerte werden in Abhängigkeit von der mittleren modifizierten Messlinie bereitgestellt.

Besonders vorteilhaft ist es, die mittlere modifizierte Messlinie als eine der 18 Messlinien des ursprünglichen Korrekturmodells zu verwenden. Die Anzahl der bereitgestellten Messlinien ist damit die gleiche wie bei dem herkömmlichen Korrekturmodell. Dementsprechend eignet sich diese Ausgestaltung besonders gut, um das neue Verfahren unter Verwendung vorhandener Komponenten zu implementieren.

In einer weiteren Ausgestaltung wird die erste und zweite Vielzahl elastischer Biegewinkel bereitgestellt, um eine elastische Vorkorrektur eines Positionsmesswertes des Messkopfes durchzuführen.

Diese Ausgestaltung ermöglicht es, die Positionsabweichungen, die aus den elastischen Verformungen des Koordinatenmessgerätes resultieren, bei der Fehlerkorrektur zu berücksichtigen. Es wird also nicht nur eine modifizierte, um die Biegewinkel befreite Messlinie bereitgestellt, die mit den Methoden des starren Modells verarbeitet werden kann. Es wird darüber hinaus auch eine Vorkorrektur jedes einzelnen Positionsmesswertes ermöglicht, so dass die Messunsicherheit weiter reduziert ist.

In einer weiteren Ausgestaltung weist das Verschiebegestell eine dritte Bewegungsachse auf, entlang der Messkopf verfahren werden kann, und es werden eine dritte und eine vierte Messlinie aufgenommen, die parallel zu der ersten und der zweiten Messlinie verlaufen, jedoch in Richtung der dritten Bewegungsachse versetzt sind.

Diese Ausgestaltung ist eine einfache Möglichkeit, um eine Abhängigkeit der elastischen Verformung von der dritten Bewegungsachse zu berücksichtigen. Bei einem Koordinatenmessgerät in Horizontalarmbauweise sind vor allem seitliche Biegungen der Säule maßgeblich, die mit der Querposition des Armes variieren. Zusätzlich können die Biegewinkel von der Position der Säule in x-Richtung abhängen. Die bevorzugte Ausgestaltung ermöglicht es, die Biegewinkel über den gesamten Verfahrbereich des Messkopfes genauer zu approximieren, woraus letztlich eine noch geringere Messunsicherheit folgt. Besonders bevorzugt ist es in diesem Fall, die für die Vorkorrektur verwendeten Biegewinkel durch Interpolation von Biegewinkeln zu berechnen, die an vier oder mehr Stellen im Messvolumen aufgenommen wurden.

In einer weiteren Ausgestaltung werden die Messlinien mit einer ersten definierten Massenverteilung aufgenommen und es wird in Abhängigkeit von der ersten definierten Massenverteilung ein massenabhängiger Korrekturfaktor bereitgestellt, um die Positionsmesswerte zu korrigieren.

Diese Ausgestaltung berücksichtigt, dass die Massenverteilung des Koordinatenmessgerätes im Messbetrieb eine andere sein kann als die Massenverteilung beim Aufnehmen der Messlinien. Die unterschiedlichen Massenverteilungen resultieren daraus, dass im Messbetrieb ein Messkopf an dem Verschiebegestell angeordnet ist, während im Kalibriermodus beispielsweise ein Reflektor für das Interferometer verwendet wird. Die Analysen der Anmelderin haben gezeigt, dass sich die unterschiedliche Massenverteilung mit Hilfe eines Korrekturfaktors, also einer multiplikativen Konstanten, sehr gut beschreiben lassen. Ein geeigneter Korrekturfaktor kann allein anhand der bekannten Lage und Größe der relevanten Massen approximiert werden, wie nachfolgend anhand eines Ausführungsbeispiels gezeigt ist. Diese Ausgestaltung ist eine einfache und kostengünstige Möglichkeit, um die Messunsicherheit weiter zu reduzieren.

In einer weiteren Ausgestaltung ist das Koordinatenmessgerät ein Horizontalarmmessgerät mit einer Basis, einer darauf angeordneten Säule und einem an der Säule angeordneten Arm, wobei die erste und zweite Messlinie als zRx(y)-Messlinien aufgenommen werden, wobei der Arm an der Säule entlang einer z-Achse vertikal verfahren wird, und wobei jede zRx(y)-Messlinie rotatorische Führungsfehler um eine x-Achse beinhaltet, entlang der die Säule auf der Basis verfahren werden kann, wobei die erste und zweite Querposition verschiedene Positionen des Arms entlang einer y-Achse sind, entlang der der Arm an der Säule horizontal verfahren werden kann.

Die Anwendung des neuen Verfahrens bei einem Koordinatenmessgerät in Horizontalarmbauweise ist besonders bevorzugt, weil hier die Biegungen der Säule einen starken Einfluss auf die Messunsicherheit haben. Das erfindungsgemäße Verfahren führt zu einer besonders effizienten Anpassung an das starre Grundmodell, wobei es schon genügen kann, die zRx-Messlinien (rotatorische Führungsfehler um die x-Achse beim Verfahren des Arms in z-Richtung) in der erfindungsgemäßen Weise aufzunehmen. Die Ausgestaltung ermöglicht eine wesentliche Reduzierung der Messunsicherheit mit nur geringem Zusatzaufwand.

In einer weiteren Ausgestaltung werden zunächst die erste und die zweite Messlinie aufgenommen und anschließend wird eine yRx-Messlinie mit yRx-Fehlerwerten aufgenommen, wobei die yRx-Fehlerwerte in Abhängigkeit von der ersten Vielzahl elastischer Biegewinkel modifiziert werden, wobei die yRx-Fehlerwerte rotatorische Führungsfehler um die x-Achse beim Verfahren des Arms entlang der y-Achse sind. Bei einer starken Abhängigkeit der Biegewinkel von der x-Position des Koordinatenmessgerätes wird vorzugsweise auch die xRx-Messlinie in Abhängigkeit von der ersten Vielzahl elastischer Biegewinkel modifiziert.

Diese Ausgestaltung führt zu einer noch besseren Anpassung der Messlinien an das ursprüngliche Grundmodell. Dabei besitzt diese Ausgestaltung den Vorteil, dass sie mit einer yRx- bzw. xRx-Messlinie auskommt, d.h. es müssen keine zweiten Messlinien in dieser Richtung aufgenommen werden. Die weitere Anpassung kann somit ohne zusätzliche Kalibrierzeit erfolgen.

In einer weiteren Ausgestaltung ist das Koordinatenmessgerät ein Portalmessgerät mit einem Portal mit einer Traverse und einem auf der Traverse angeordneten Schlitten, wobei die erste und zweite Messlinie als yRx(x)-Messlinien aufgenommen werden, die rotatorische Führungsfehler um eine x-Achse beim Verfahren entlang einer y-Achse beinhalten, wobei die x-Achse die Position des Schlittens auf der Traverse angibt, und wobei die y-Achse die Bewegungsachse für das Portal ist.

Der Begriff Portalmessgerät im Sinne dieser Ausgestaltung beinhaltet Portalmessgeräte im engeren Sinne und auch Koordinatenmessgeräte in Brückenbauweise. Es hat sich gezeigt, dass eine gute Anpassung an das querpositionsunabhängige Grundmodell bei diesen Koordinatenmessgeräten erreicht wird, wenn die yRx-Messlinien in der erfindungsgemäßen Weise aufgenommen und verarbeitet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     ein Koordinatenmessgerät in Horizontalarmbauweise mit einer Auswer- teeinrichtung gemäß der vorliegenden Erfindung,

Fig. 2     zwei zRx-Messlinien, die ohne Führungsfehlerkorrektur an einem Koordinatenmessgerät gemäß Fig. 1 aufgenommen wurden,

Fig. 3.    die Messlinien aus Fig. 2, jedoch nach Subtraktion der erfindungsge- mäß approximierten Biegewinkel,

Fig. 4     eine schematische Darstellung zur Erläuterung eines Ausführungsbeispiels der Erfindung,

Fig. 5     zwei Diagramme zur Erläuterung des Zusammenhangs zwischen den Biegewinkeln der Säule des Koordinatenmessgerätes aus Fig. 1 und den äquivalenten Drehwinkeln,

Fig. 6     ein vereinfachtes Flussdiagramm zur Erläuterung eines Ausführungsbeispiels der Erfindung, und

Fig. 7 ein vereinfachtes Flussdiagramm zur Erläuterung eines Verfahrens, bei dem Positionsmesswerte in der erfindungsgemäßen Weise korrigiert werden.

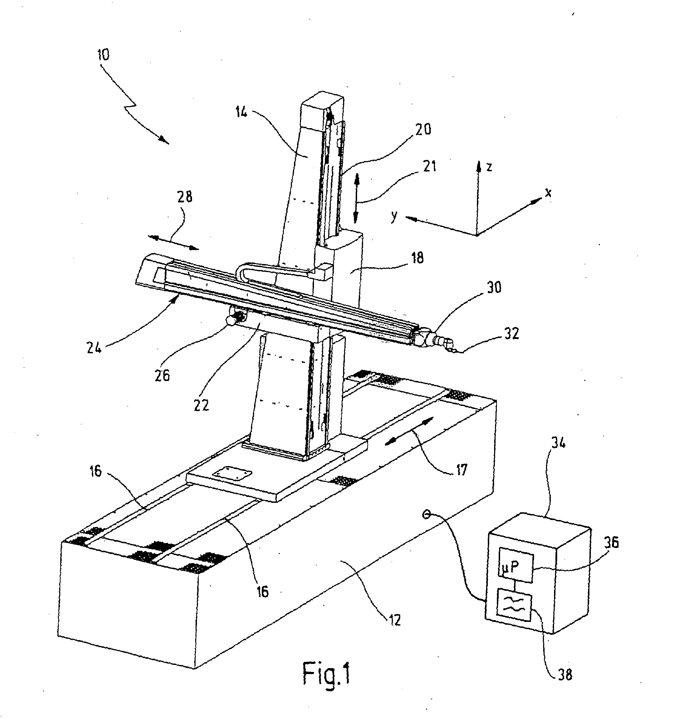

In Fig. 1 ist ein Koordinatenmessgerät in seiner Gesamtheit mit der Bezugsziffer 10 bezeichnet. Das Koordinatenmessgeräte 10 ist ein Horizontalarmmessgerät. Die Erfindung ist hierauf jedoch nicht beschränkt und kann vorteilhaft auch bei Koordinatenmessgeräten in Portal- oder Brückenbauweise oder in anderer Bauweise angewendet werden.

Das Koordinatenmessgerät 10 besitzt eine Basis 12, auf der eine Säule 14 angeordnet ist. Die Säule 14 sitzt auf Führungsschienen 16 und kann in Richtung des Pfeils 17 verfahren werden. Die Bewegungsachse 17 wird üblicherweise als x-Achse bezeichnet.

Mit der Bezugsziffer 18 ist ein Kreuzschlitten bezeichnet, der an der Säule 14 angeordnet ist. Der Kreuzschlitten 18 kann auf Führungsschienen 20 in Richtung des Pfeils 21 verfahren werden. Die Bewegungsachse 21 wird üblicherweise als z-Achse bezeichnet.

Der Kreuzschlitten 18 besitzt ein Auflager 22, auf dem ein Arm 24 gelagert ist. Der Arm 24 kann über einen Antrieb 26 in Richtung des Pfeils 28 verfahren werden. Die Bewegungsachse 28 hier als y-Achse bezeichnet. Bei einem Koordinatenmessgerät in Portal- oder Brückenbauweise ist die y-Achse demgegenüber die Bewegungsachse für das Portal oder die Brücke, während die x-Achse die Position des Schlittens auf der Traverse bzw. der Brücke angibt. Die z-Achse bezeichnet auch in diesem Fall die Höhe des Messkopfes über der Basis.

Am rechten freien Ende des Arms 24 ist ein Messkopf 30 angeordnet, der hier einen Taststift 32 trägt. Die Erfindung kann jedoch nicht nur bei taktilen Koordinatenmessgeräten, sondern auch bei berührungslos messenden Koordinatenmessgeräten angewendet werden. Darüber hinaus kann die Erfindung auch bei Werkzeugmaschinen und anderen Maschinen eingesetzt werden, bei denen ein Mess- oder Arbeitskopf positionsgenau in verschiedenen Raumrichtungen verfahren wird.

Mit der Bezugsziffer 34 ist eine Auswerteeinheit bezeichnet, die hier vereinfacht mit einem Prozessor 36 und einem Speicher 38 dargestellt ist. Der Speicher 38 enthält ein Programmmodul mit Programmcode, der dazu ausgebildet ist, ein Verfahren der nachfolgend beschriebenen Art auszuführen. Außerdem sind in dem Speicher 38 die Fehlerwerte abgespeichert, die entlang von Messlinien aufgenommen wurden, und es sind Polynomkoeffizienten und andere Daten hinterlegt, die dazu dienen, die Führungsfehlerkorrektur nach dem erfindungsgemäßen Verfahren durchzuführen.

Zum Kalibrieren wird der Messkopf 30 durch einen Reflektor ersetzt, so dass die Raumpositionen des Koordinatenmessgerätes 10 mit Hilfe eines Interferometers vermessen werden können. Die Interferometermesswerte werden mit den Positionsmesswerten verglichen, die das Koordinatenmessgerät 10 liefert. Daraus lassen sich Fehlerwerte ableiten, die zur Korrektur der Führungsfehler verwendet werden.

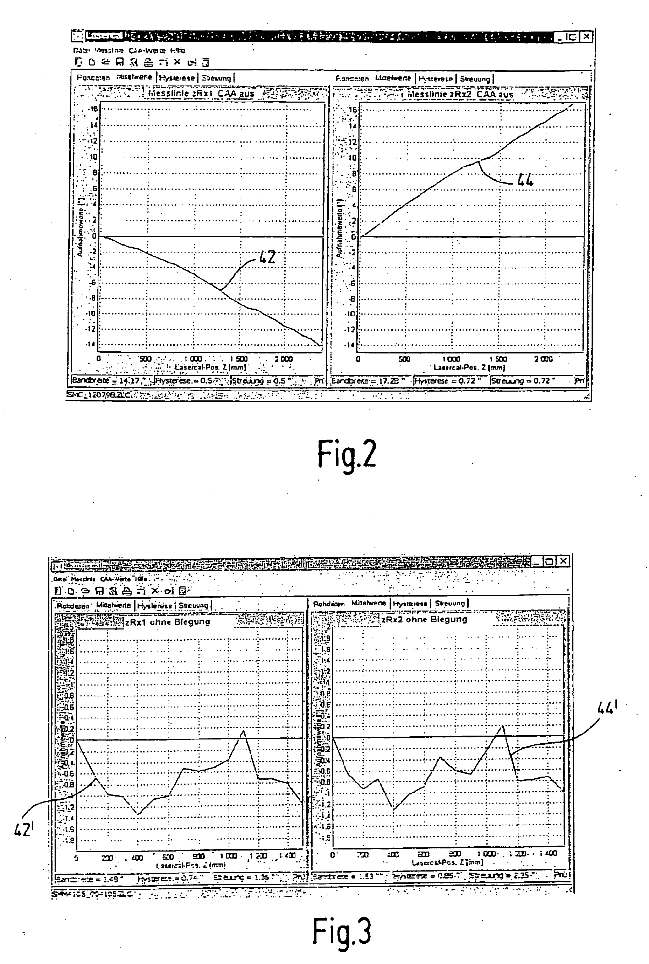

Fig. 2 zeigt zwei derartige Messlinien 42, 44, die bei einem Koordinatenmessgerät der in Fig. 1 gezeigten Art aufgenommen wurden. Die Messlinien 42, 44 wurden ohne Führungsfehlerkorrektur aufgenommen. Es handelt sich um zwei zRx-Messlinien, wobei die Messlinie 42 bei eingefahrenem Arm (Arm ganz links) und die Messlinie 44 bei ausgefahrenem Arm (Arm ganz rechts) aufgenommen wurden. Die Messlinien zeigen die rotatorischen Führungsfehler (Drehung) um die x-Achse beim Verfahren des Arms 24 in z-Richtung. Es ist leicht zu erkennen, dass die Messlinie 42 eine zunehmende negative Abweichung anzeigt, während die Messlinie 44 eine zunehmende positive Abweichung anzeigt. Dieser Unterschied resultiert daraus, dass sich die Säule 14 bei eingefahrenem Arm nach links und bei ausgefahrenem Arm nach rechts biegt.

Die zRx-Messlinie ist also abhängig von der Querposition des Arms 24. Damit ist eines der Axiome des ursprünglichen starren (besser: querpositionsunabhängigen) Korrekturmodells verletzt.

In dem ursprünglichen Korrekturmodell ist die zRx-Messlinie jedoch gar nicht dazu vorgesehen, Biegungen der Säule 14 zu beschreiben. Stattdessen soll die zRx-Messlinie eine Rotation des Arms um sein Lager an der Säule beschreiben, die sich beim Verfahren des Arms 24 in z-Richtung ergibt. In den Messlinien 42, 44 ist diese Rotation von den Biegewinkeln der Säule 14 überlagert.

Nach dem neuen Verfahren werden die Biegewinkel $\xi(z)$ der Säule 14 durch ein Polynom zweiten Grades angenähert:

$$\xi(z) = a_1 \cdot z + a_2 \cdot z^2$$

Die Koeffizienten $a_1$, $a_2$ dieses Polynoms lassen sich unter Verwendung einer Gaußapproximation aus den Fehlerwerten der zRx-Messlinie bestimmen.

Befreit man die beiden Messlinien 42, 44 von den überlagerten Biegewinkeln $\xi(z)$, erhält man die Messlinien 42', 44', die in Fig. 3 dargestellt sind. Die nahezu gleichen Verläufe lassen den Schluss zu, dass das oben angegebene Ausgleichspolynom die elastische Biegung der Säule gut beschreibt. Die Messlinien 42', 44' geben damit die "wahre" Rotation der Säule 14 um die x-Achse beim Verfahren in z-Richtung an. In einem bevorzugten Ausführungsbeispiel der Erfindung werden die modifizierten Messlinien 42', 44' gemittelt, um eine mittlere modifizierte Messlinie (hier nicht dargestellt) zu erhalten. Die mittlere modifizierte Messlinie wird dann als eine der 18 Messlinien des ursprünglichen Korrekturmodells verwendet.

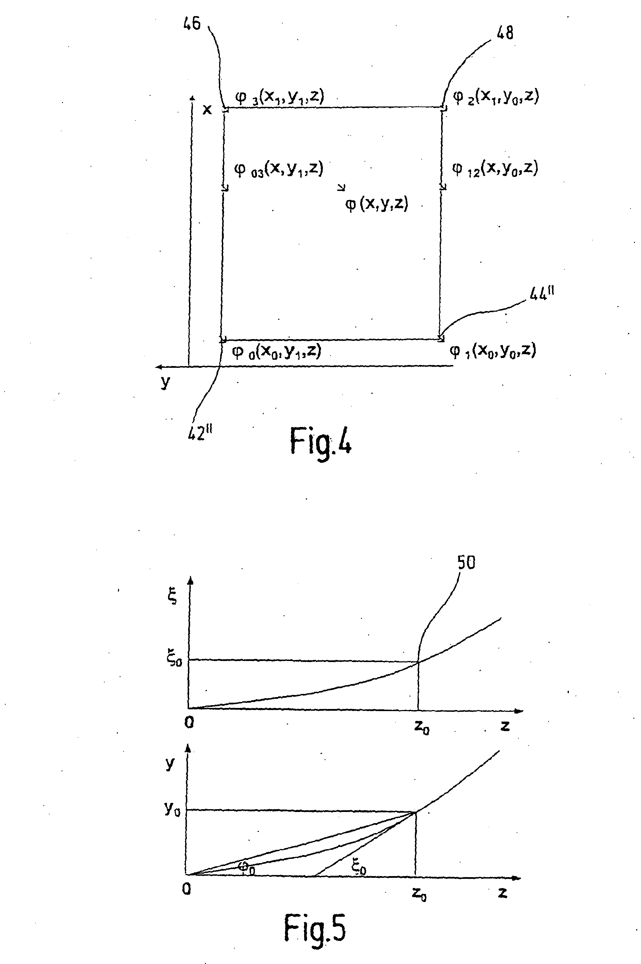

Fig. 4 zeigt eine Draufsicht auf die x-y-Ebene des Koordinatenmessgerätes 10. Eingezeichnet sind vier Orte, an denen die zRx-Messlinie gemäß einem bevorzugtem Ausführungsbeispiel der Erfindung aufgenommen wird. Die Bezugsziffern 42", 44" bezeichnen die Orte, an denen die Messlinien 42, 44 aufgenommen werden. Die Orte 42", 44" unterscheiden sich allein in Bezug auf die y-Position. Zusätzlich werden hier eine dritte und eine vierte zRx-Messlinie aufgenommen, die bei den Bezugsziffern 46, 48 angegeben sind. Die Messlinie 46 entspricht der Messlinie 42, jedoch für eine andere x-Position. Ebenso entspricht die Messlinie 48 der Messlinie 44, jedoch für die andere x-Position. Die Aufnahme der dritten und vierten Messlinie 46, 48 ist vorteilhaft, wenn das Biegeverhalten der Säule 14 in nennenswertem Ausmaß von der x-Position abhängt.

In Fig. 4 sind die Messlinien 42 bis 48 in "Draufsicht" dargestellt. Die Orte der vier Messlinien 42 bis 48 spannen ein Rechteck auf. Angegeben sind in Fig. 4 allerdings nicht die Messlinien selbst, sondern äquivalente Drehwinkel $\varphi$ (x, y, z). Die äquivalenten Drehwinkel hängen mit den Biegewinkeln der Säule 14 zusammen, wie nachfolgend anhand Fig. 5 erläutert wird.

In Fig. 5 zeigt das obere Diagramm den Verlauf des Biegewinkels $\xi(z)$ der Säule 14. Mit der Bezugsziffer 50 ist ein Biegewinkel $\xi_0(z_0)$ bezeichnet. Das untere Diagramm zeigt den Zusammenhang zwischen $\xi_0$ und einem äquivalenten Drehwinkel $\varphi_0$, wobei $\varphi_0$ denjenigen Drehwinkel angibt, um den eine als steif angenommene Säule (zusätzlich) um ihren Fußpunkt gedreht werden müsste, um an der Stelle $y_0$, $z_0$ dieselbe Positionsabweichung zu erhalten, die durch die elastische Biegung der Säule verursacht wird. Der mathematische Zusammenhang zwischen dem Drehwinkel $\varphi(z)$ und dem Biegewinkel $\xi(z)$ lässt sich folgendermaßen approximieren:

$$\varphi(z) = \frac{\dfrac{a_1}{2} \cdot z^2 + \dfrac{a_2}{3} \cdot z^3}{z} \, ,$$

wobei $a_1$, $a_2$ die Koeffizienten aus dem oben angegebenen Polynom für die Biegewinkel $\xi(z)$ sind. Der Term im Zähler ist die Stammfunktion des oben angegebenen Polynoms, die sich nach einmaliger Integration unter Beachtung der Randbedingung $y(z = 0) = 0$ ergibt. Die Drehwinkel $\varphi(x, y, z)$, die sich aus den Messlinien 42 bis 48 berechnen lassen, können vorteilhafterweise zur Vorkorrektur der yRx- und der xRx-Messlinie verwendet werden, so dass diese Messlinien ebenfalls querpositionsunabhängig werden.

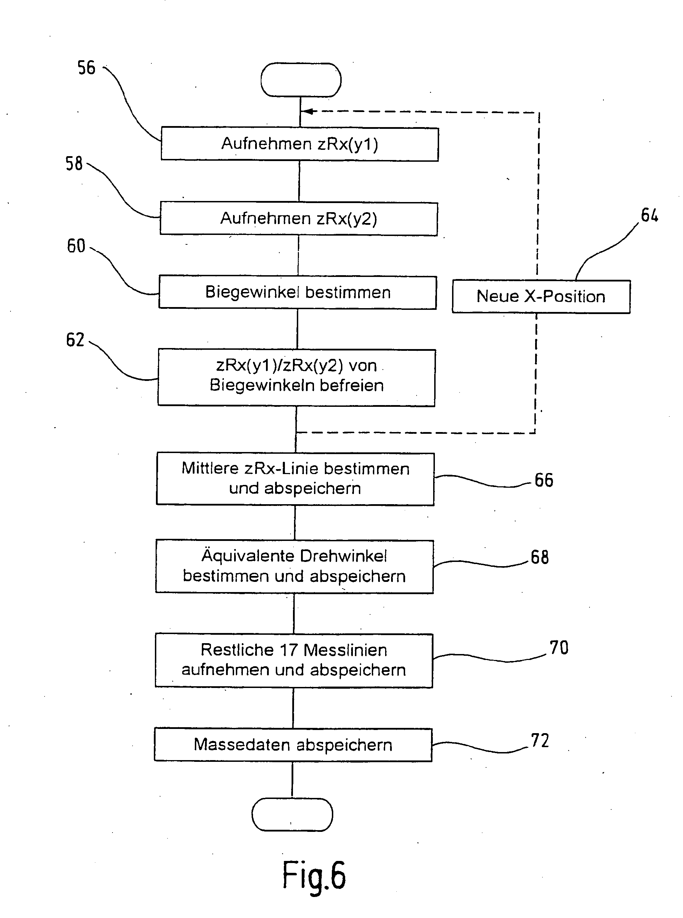

Fig. 6 zeigt ein Ausführungsbeispiel zum Aufnehmen der Messlinien bei dem Koordinatenmessgerät aus Fig. 1. Gemäß Schritt 56 wird eine erste zRx-Messlinie an einer Position $y_1$ aufgenommen. Gemäß Schritt 58 wird eine zweite zRx-Messlinie an der Position $y_2$ aufgenommen. Anschließend erfolgt gemäß Schritt 60 die Bestimmung der Biegewinkel $\xi(y,z)$. Gemäß Schritt 62 werden die Fehlerwerte der ersten und zweiten zRx-Messlinie von den Biegewinkeln befreit, d.h. die Biegewinkel $\xi(y,z)$ werden von den Fehlerwerten entlang der Messlinien zRx $(y_1,z)$ und zRx $(y_2,z)$ subtrahiert. Das Resultat des Schritts 62 sind modifizierte erste und zweite Messlinien, wie sie in Fig. 3 dargestellt sind.

Gemäß Schritt 64 kann die Aufnahme einer dritten und einer vierten zRx-Messlinie an einer anderen x-Position erfolgen. Bei geringer x-Abhängigkeit kann der zweite Schleifendurchlauf 64 entfallen.

Gemäß Schritt 66 wird eine mittlere zRx-Linie bestimmt und im Speicher 38 des Koordinatenmessgerätes 10 als relevante zRx-Messlinie für eine Führungsfehlerkorrektur nach dem herkömmlichen, querpositionsunabhängigen Modell bereitgestellt.

Außerdem werden gemäß Schritt 68 die äquivalenten Drehwinkel $\varphi$ (x,y,z) bestimmt und in dem Speicher 38 abgespeichert. Schließlich erfolgt gemäß Schritt 70 die Aufnahme der restlichen 17 Messlinien, die von dem herkömmlichen querpositionsunabhängigem Modell bekannt sind. Gemäß Schritt 72 werden außerdem die Massedaten, d.h. die Masse und die Position des Reflektors (hier nicht dargestellt) am Arm 24 abgespeichert.

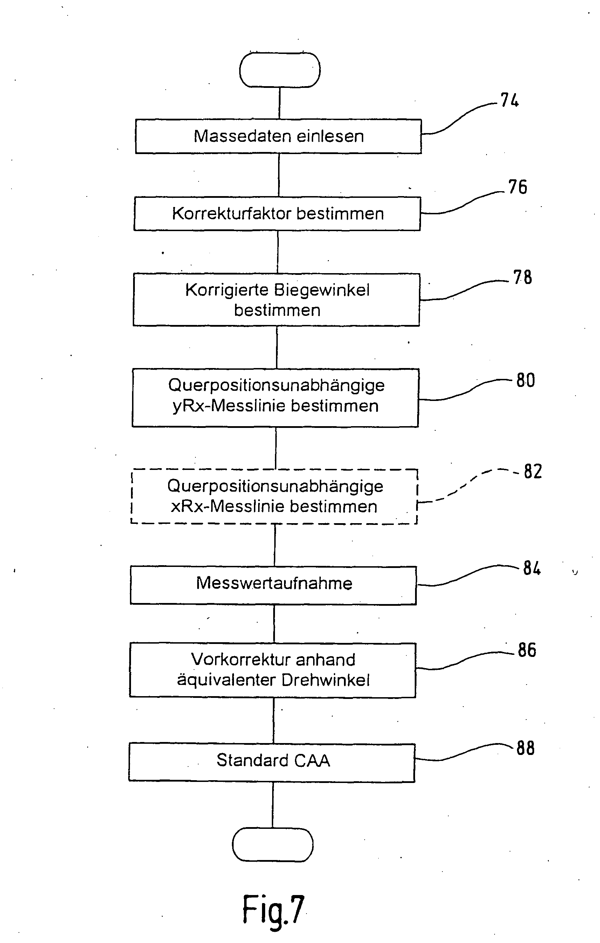

Das Programmmodul (nicht dargestellt) im Speicher 38 ist dazu ausgebildet, ein Korrekturverfahren durchzuführen, wie es in Fig. 7 schematisch dargestellt ist.

Vorteilhafterweise werden gemäß Schritt 74 zunächst die Massedaten des Koordinatenmessgerätes 10 im Messbetrieb eingelesen. Dies sind die Masse und die räumliche Lage des Messkopfes 30 am freien Ende des Arms 24. Gemäß Schritt 76 erfolgt die Bestimmung eines Korrekturfaktors, der die unterschiedliche Masseverteilung im Kalibriermodus und im Messbetrieb berücksichtigt. Der Korrekturfaktor k kann nach folgender Formel berechnet werden:

$$K = \frac{D_2(m_2, d_2)}{D_1(m_1, d_1)},$$

wobei

$$D(m_i, d_i) = \left( L_0 - f \cdot \frac{L}{2} \right) \cdot M + (L_0 - d_i) \cdot m_i,$$

und wobei

L die Gesamtlänge des Arms 24 ist,

Lo die Länge des Arms 24 ist, gemessen von der Säule 14 bis zum freien Ende des Arms 24,

M die Masse des Arms 24 ist,

$m_i$ die Masse des Messkopfes 30 bzw. die Masse des Reflektors (nicht dargestellt) ist,

$d_i$ die Entfernung der Masse $m_i$ vom freien Ende des Arms 24 ist, und

f = 1 ist, wenn die Biegung der Säule betrachtet wird.

$D_1(m_1, d_1)$ bezeichnet im diesem Fall die Massedaten im Kalibrierbetrieb und $D_2(m_2, d_2)$ bezeichnet die Massedaten im Messbetrieb, die gemäß Schritt 74 eingelesen wurden.

Gemäß Schritt 78 werden nun die in Schritt 60 bestimmten Biegewinkel mit dem Faktor k multipliziert und die vorkorrigierten Ausgleichspolynome werden gemäß Schritt 80 dazu verwendet, eine querpositionsunabhänge yRx-Messlinie gemäß folgender Beziehung zu bestimmen.

$$Y \widetilde{R} x(y) = yRx(y, z) - \xi(y, z).$$

Für den Fall einer relevanten x-Abhängigkeit wird außerdem eine vorkorrigierte xRx-Messlinie im Schritt 82 bestimmt.

Gemäß Schritt 84 erfolgt dann die Messwertaufnahme, d.h. es wird die Position des Messkopfes 30 im Messbetrieb des Koordinatenmessgerätes 10 bestimmt. Gemäß Schritt 86 erfolgt eine Vorkorrektur der Messwerte unter Verwendung der äquivalenten Drehwinkel, wobei der zu Wert φ (x, y, z) gemäß Fig. 4 aus der Interpolation der Eckwerte bestimmt wird. Anschließend erfolgt gemäß Schritt 88 eine Führungsfehlerkorrektur auf Basis des querpositionsunabhängigen Modells.

Ragt an dem Arm 24 eine Masse m in Richtung der x-Achse heraus, erfährt der Arm 24 eine Torsion (yRy), die Säule 14 biegt sich um die y-Achse (zRy), und es verändert sich die x-Führung 16 (xRy). Diese Messlinien können ebenfalls nach dem neuen Verfahren modifiziert werden, um die Anwendung des querpositionsunabhängigen Korrekturmodells ohne systematischen Fehler zu ermöglichen.

**Patentansprüche**

1.   Verfahren zum Korrigieren von Führungsfehlern einer Maschine, insbesondere eines Koordinatenmessgerätes (10), mit einem Mess- oder Arbeitskopf (30), der an einem Verschiebegestell (12, 14, 24) mit zumindest zwei Bewegungsachsen (17, 21, 28) angeordnet ist, mit den Schritten:

   - Verfahren des Verschiebegestells (12, 14, 24) entlang der zumindest zwei Bewegungsachsen (17, 21, 28) und Aufnehmen einer Vielzahl von Messlinien (42, 44) mit einer Vielzahl von Fehlerwerten, die translatorische und rotatorische Führungsfehler entlang der zumindest zwei Bewegungsachsen (17, 21, 28) repräsentieren,
   - Identifizieren einer Bewegungsachse (21), bei der ein rotatorischer Führungsfehler von einer Querposition des Verschiebegestells (12, 14, 24) abhängt, wobei die Querposition eine Position des Verschiebegestells (12, 14, 24) quer zu der identifizierten Bewegungsachse (21) repräsentiert,
   - Aufnehmen einer ersten und einer zweiten Messlinie (42, 44) für den rotatorischen Führungsfehler entlang der identifizierten Bewegungsachse (21), wobei das Verschiebegestell (12, 14, 24) eine erste und eine zweite Querposition einnimmt, und
   - Bereitstellen von positionsabhängigen Korrekturwerten für eine Position des Mess-oder Arbeitskopts (30) in Abhängigkeit von den Messlinien (42, 44) entlang der zumindest zwei Bewegungsachsen (17, 21, 28), um einen Positionsmesswert des Mess-oder Arbeitskopts (30) zu korrigieren,

**dadurch gekennzeichnet,**

- **dass** unter Verwendung der ersten Messlinie (42) eine erste Vielzahl elastischer Biegewinkel ($\xi(z)$) des Verschiebegestells (12, 14, 24) bestimmt wird,
- **dass** die erste Vielzahl elastischer Biegewinkel $\xi(z)$ von den Fehlerwerten der ersten Messlinie (42) subtrahiert wird, um eine erste modifizierte Messlinie (42') zu erhalten, die querpositionsunabhängige Fehlerwerte entlang der identifizierten Bewegungsachse (21) repräsentiert, und
- **dass** die positionsabhängigen Korrekturwerte in Abhängigkeit von den Fehlerwerten der ersten modifizierten Messlinie (42') bereitgestellt werden.

2. Verfahren nach Anspruch 1, **dadurch gekennzeichnet, dass** die erste Vielzahl elastischer Biegewinkel $\xi(z)$ mit Hilfe eines Polynoms approximiert wird, wobei Polynomkoeffizienten $a_1$, $a_2$ des Polynoms unter Verwendung einer Minimumapproximation, insbesondere unter Verwendung einer Gaußapproximation, aus den Fehlerwerten entlang der ersten Messlinie (42) bestimmt werden.

3. Verfahren nach Anspruch 1 oder 2, **dadurch gekennzeichnet, dass** ferner eine zweite Vielzahl elastischer Biegewinkel unter Verwendung der zweiten Messlinie (44) bestimmt wird, und dass die zweite Vielzahl elastischer Biegewinkel von den Fehlerwerten der zweiten Messlinie (44) subtrahiert werden, um eine zweite modifizierte Messlinie (44) zu erhalten, wobei die positionsabhängigen Korrekturwerte in Abhängigkeit von der ersten und der zweiten modifizierten Messlinie (42', 44') bereitgestellt werden.

4. Verfahren nach Anspruch 3, **dadurch gekennzeichnet, dass** unter Verwendung der ersten und zweiten modifizierten Messlinie (42', 44') eine mittlere modifizierte Messlinie (66) bestimmt wird, und dass die positionsabhängigen Korrekturwerte in Abhängigkeit von der mittleren modifizierten Messlinie (66) bereitgestellt werden.

5. Verfahren nach Anspruch 3 oder 4, **dadurch gekennzeichnet, dass** die erste und zweite Vielzahl elastischer Biegewinkel bereitgestellt (68) wird, um eine elastische Vorkorrektur (86) eines Positionsmesswertes des Messkopfes durchzuführen.

6. Verfahren nach einem der Ansprüche 1 bis 5, **dadurch gekennzeichnet, dass** das Verschiebegestell (12, 14, 24) eine dritte Bewegungsachse (17) aufweist, entlang der der Messkopf (30) verfahren werden kann, und dass eine dritte und eine vierte Messlinie (46, 48) aufgenommen werden, die parallel zu der ersten und zweiten Messlinie (42, 44) verlaufen, jedoch in Richtung der dritten Bewegungsachse (17) versetzt sind.

7. Verfahren nach einem der Ansprüche 1 bis 6, **dadurch gekennzeichnet, dass** die Messlinien (42 - 48) mit einer ersten definierten Massenverteilung aufgenommen werden und dass in Abhängigkeit von der ersten definierten Massenverteilung ein massenabhängiger Korrekturfaktor bereitgestellt wird, um die Positionsmesswerte zu korrigieren.

8. Verfahren nach einem der Ansprüche 1 bis 7, **dadurch gekennzeichnet, dass** das Koordinatenmessgerät (10) ein Horizontalarmmessgerät mit einer Basis (12), einer darauf angeordneten Säule (14) und einem an der Säule (14) angeordneten Arm (24) ist, und dass die erste und zweite Messlinie (42, 44) als zRx(y)-Messlinien aufgenommen werden, wobei der Arm (24) an der Säule (14) entlang einer z-Achse (21) vertikal verfahren wird, und wobei jede zRx(y)-Messlinie rotatorische Führungsfehler um eine x-Achse (17) beinhaltet, entlang der die Säule (14) auf der Basis (12) verfahren werden kann, wobei die erste und zweite Querposition verschiedene Positionen des Arms (24) entlang einer y-Achse (28) sind, entlang der der Arm (24) an der Säule (14) horizontal verfahren werden kann.

9. Verfahren nach Anspruch 8, **dadurch gekennzeichnet, dass** zunächst die erste und die zweite Messlinie (42, 44) aufgenommen werden und dass anschließend eine yRx-Messlinie mit yRx-Fehlerwerten aufgenommen wird, wobei die yRx-Fehlerwerte in Abhängigkeit von der ersten Vielzahl elastischer Biegewinkel $\xi(z)$ modifiziert werden, und wobei die yRx-Fehlerwerte rotatorische Führungsfehler um die x-Achse (17) beim Verfahren des Arms (24) entlang der y-Achse (28) sind.

10. Verfahren nach einem der Ansprüche 1 bis 7, **dadurch gekennzeichnet, dass** das Koordinatenmessgerät ein Portalmessgerät mit einem Portal mit einer Traverse und einem auf der Traverse angeordneten Schlitten ist, und dass die erste und zweite Messlinie (42, 44) als yRx(x)-Messlinien aufgenommen werden, die rotatorische Führungsfehler um eine x-Achse beim Verfahren entlang einer y-Achse beinhalten, wobei die x-Achse die Position des Schlittens auf der Traverse angibt, und wobei die y-Achse die Bewegungsachse für das Portal ist.

11. Computerprogramm mit Programmcode, der zur Durchführung eines Verfahrens nach einem der Ansprüche 1 bis 10 ausgebildet ist, wenn der Programmcode auf einer Auswerteeinheit einer Maschine nach Anspruch 12 ausgeführt wird, wobei der Programmcode sämtliche Verfahrensschritte des Verfahrens enthält.

12. Maschine, insbesondere Koordinatenmessgerät, mit einem Verschiebegestell (12, 14, 24) mit zumindest zwei Bewegungsachsen (17, 21, 28), mit einem Mess- oder Arbeitskopf (30), der an dem Verschiebegestell (12, 14, 24) angeordnet ist, und mit einer Auswerteeinheit (34) zum Korrigieren von Führungsfehlern mit einem Speicher (38), in dem eine Vielzahl von Fehlerwerten gespeichert sind, die translatorische und rotatorische Führungsfehler des Verschiebegestells (12, 14, 24) entlang der zumindest zwei Bewegungsachsen (17, 21, 28) repräsentieren, **dadurch gekennzeichnet, dass** die Fehlerwerte zumindest eine erste modifizierte Messlinie (42') repräsentieren, die von einer Querposition des Verschiebegestells (12, 14, 24) unabhängig ist, sowie eine erste Vielzahl elastischer Biegewinkel $\xi(z)$, die eine Querpositionsabhängigkeit der ersten modifizierten Messlinie (42') repräsentieren, wobei die Auswerteeinheit (34) dazu ausgebildet ist, positionsabhängige Korrekturwerte für eine Position des Mess-oder Arbeitskopfs (30) in Abhängigkeit derjenigen Fehlerwerte, die die erste modifizierte Messlinie (42') repräsentieren, bereitzustellen, um einen Positionswert des Mess-oder Arbeitskopfs (30) zu korrigieren.

## Claims

1. A method for correcting guidance errors of a machine, in particular of a coordinate measuring machine (10), comprising a measuring or working head (30), which is disposed on a moveable frame (12, 14, 24) having at least two motional axes (17, 21, 28), said method comprising the steps of

   - moving the moveable frame (12, 14, 24) along the at least two motional axes (17, 21, 28) and recording a plurality of measuring lines (42, 44) having a plurality of error values representing translatory and rotary guidance errors along the at least two motional axes (17, 21, 28),
   - identifying a motional axis (21) in which a rotary guidance error is dependent on a transverse position of the moveable frame (12, 14, 24), the transverse position representing a position of the moveable frame (12, 14, 24) transversely to the identified motional axis (21),
   - recording a first and a second measuring line (42, 44) for the rotary measuring error along the identified motional axis (21), with the moveable frame (12, 14, 24) assuming a first and a second transverse position, and
   - providing position-dependent correction values for a position of the measuring or working head (30) in dependence on the measuring lines (42, 44) along the at least two motional axes (17, 21, 28) in order to correct a position measurement value of the measuring or working head (30),

   **characterized**

   - **in that** a first plurality of elastic bending angles $\xi(z)$ of the moveable frame (12, 14, 24) is determined by the use of the first measuring line (42),
   - **in that** the first plurality of elastic bending angles $\xi(z)$ is subtracted from the error values of the first measuring line (42) in order to obtain a first modified measuring line (42'), which represents error values, independent of the transverse position, along the identified motional axis (21), and
   - **in that** the position-dependent correction values are provided in dependence on the error values of the first modified measuring line (42').

2. The method of Claim 1, **characterized in that** the first plurality of elastic bending angles $\xi(z)$ is approximated uding a polynomial, with polynomial coefficients a1, a2 of the polynomial being determined by the use of a minimum approximation, in particular by the use of a Gauss approximation, from the error values along the first measuring line (42).

3. The method of Claim 1 or 2, **characterized in that**, in addition, a second plurality of elastic bending angles is determined by the use of the second measuring line (44), and **in that** the second plurality of elastic bending angles is subtracted from the error values of the second measuring line (44) in order to obtain a second modified measuring line (44), the position-dependent correction values being provided in dependence on the first and the second modified measuring line (42', 44').

4. The method of Claim 3, **characterized in that** a mean modified measuring line (66) is determined by the use of the first and the second modified measuring line (42', 44'), and **in that** the position-dependent correction values are provided in dependence on the mean modified measuring line (66).

5. The method of Claim 3 or 4, **characterized in that** the first and second multiplicities of elastic bending angles (68) are provided in order to perform an elastic pre-correction (86) of a position measurement value of the measuring head.

6. The method of one of Claims 1 to 5, **characterized in that** the moveable frame (12, 14, 24) has a third motional axis (17) along which the measuring head (30) can be displaced, and **in that** a third and a fourth measuring line (46, 48) are recorded, which measuring lines run parallel to the first and the second measuring lines (42, 44), yet are offset in the direction of the third motional axis (17).

7. The method of one of Claims 1 to 6, **characterized in that** the measuring lines (42 - 48) are recorded with a first defined mass distribution, and **in that**, in dependence on the first defined mass distribution, a mass-dependent correction factor is provided in order to correct the position measurement values.

8. The method of one of Claims 1 to 7, **characterized in that** the coordinate measuring machine (10) is a horizontal-arm measuring machine comprising a base (12), a pillar (14) disposed thereon and an arm (24) disposed on the pillar (14), and **in that** the first and the second measuring line (42, 44) are recorded as zRx(y) measuring lines, wherein the arm (24) is displaced vertically on the pillar (14) along a z-axis (21), and wherein each zRx(y) measuring line contains rotary guidance errors about an x-axis (17) along which the pillar (14) can be displaced on the base (12), the first and the second transverse position being different positions of the arm (24) along a y-axis (28) along which the arm (24) can be horizontally displaced on the pillar (14).

9. The method of Claim 8, **characterized in that** firstly the first and the second measuring line (42, 44) are recorded, and **in that** next a yRx measuring line with yRx error values is recorded, the yRx error values being modified in dependence on the first plurality of elastic bending angles $\xi(z)$ and the yRx error values being rotary guidance errors about the x-axis (17) in the displacement of the arm (24) along the y-axis (28).

10. The method of one of Claims 1 to 7, **characterized in that** the coordinate measuring machine is a portal-type measuring machine comprising a portal having a crossbeam and a carriage arranged on the crossbeam, and **in that** the first and the second measuring lines (42, 44) are recorded as yRx(x) measuring lines, which comprise rotary guidance errors about an x-axis in the displacement along a y-axis, the x-axis indicating the position of the carriage on the crossbeam and the y-axis being the motional axis for the portal.

11. A computer program having program code configured to implement a method according to one of Claims 1 to 10 when the program code is executed on an evaluation unit of a machine according to Claim 12, the program code comprising all method steps of the method.

12. A machine, in particular a coordinate measuring machine, comprising a moveable frame (12, 14, 24) having at least two motional axes (17, 21, 28), comprising a measuring or working head (30) disposed on the moveable frame (12, 14, 24), and comprising an evaluation unit (34) for the correction of guidance errors, said evaluation unit having a memory (38) in which a plurality of error values representing translatory and rotary guidance errors of the moveable frame (12, 14, 24) along the at least two motional axes (17, 21, 28) are stored, **characterized in that** the error values represent at least a first modified measuring line (42'), which is independent of a transverse position of the moveable frame (12, 14, 24), as well as a first plurality of elastic bending angles $\xi(z)$, represents a transverse position dependency of the first modified measuring line (42'), the evaluation unit (34) being configured to provide position-dependent correction values for a position of the measuring or working head (30) in dependence on those error values which represent the first modified measuring line (42'), in order to correct a position value of the measuring or working head (30).

**Revendications**

1. Procédé pour corriger les erreurs de guidage d'une machine, notamment d'un appareil de mesure de coordonnées (10) comprenant une tête de mesure ou de travail (30) qui est montée sur un bâti coulissant (12, 14, 24) avec au moins deux axes de déplacement (17, 21, 28), comprenant les étapes suivantes:

- Déplacement du bâti coulissant (12, 14, 24) le long des au moins deux axes de déplacement (17, 21, 28) et enregistrement d'une pluralité de lignes de mesure (42, 44) ayant une pluralité de valeurs erronées, lesquelles représentent les erreurs de guidage translatoires et rotatoires le long des au moins deux axes de déplacement (17, 21, 28),
- Identification d'un axe de déplacement (21) avec lequel une erreur de guidage rotatoire dépend d'une position transversale du bâti coulissant (12, 14, 24), la position transversale représentant une position du bâti coulissant (12, 14, 24) transversale par rapport à l'axe de déplacement (21) identifié,
- Enregistrement d'une première et d'une deuxième ligne de mesure (42, 44) pour l'erreur de guidage rotatoire le long de l'axe de déplacement (21) identifié, le bâti coulissant (12, 14, 24) adoptant une première et une deuxième position transversale, et
- Fourniture de valeurs de correction dépendantes de la position pour une position de la tête de mesure ou de travail (30) en fonction des lignes de mesure (42, 44) le long des au moins deux axes de déplacement (17, 21, 28) afin de corriger une valeur de position de la tête de mesure ou de travail (30),

**caractérisé en ce**

- **qu'**une première pluralité d'angles de flexion élastique ($\xi(z)$) du bâti coulissant (12, 14, 24) est déterminée en utilisant la première ligne de mesure (42),
- **que** la première pluralité d'angles de flexion élastique $\xi(z)$ est soustraite des valeurs erronées de la première ligne de mesure (42) afin d'obtenir une première ligne de mesure modifiée (42'), laquelle représente des valeurs erronées indépendantes de la position transversale le long de l'axe de déplacement (21) identifié, et
- **que** les valeurs de correction dépendantes de la position sont fournies en fonction des valeurs erronées de la première ligne de mesure modifiée (42').

2. Procédé selon la revendication 1, **caractérisé en ce que** la première pluralité d'angles de flexion élastique $\xi(z)$ est déterminée approximativement au moyen d'un polynôme, les coefficients de polynôme $a_1$, $a_2$ du polynôme étant définis en utilisant une approximation minimale, notamment en utilisant une approximation gaussienne, à partir des valeurs erronées le long de la première ligne de mesure (42).

3. Procédé selon la revendication 1 ou 2, **caractérisé en ce qu'**une deuxième pluralité d'angles de flexion élastique est en outre déterminée en utilisant la deuxième ligne de mesure (44), et **en ce que** la deuxième pluralité d'angles de flexion élastique est soustraite des valeurs erronées de la deuxième ligne de mesure (44) afin d'obtenir une deuxième ligne de mesure modifiée (44), les valeurs de correction dépendantes de la position étant fournies en fonction de la première et de la deuxième ligne de mesure modifiée (42', 44').

4. Procédé selon la revendication 3, **caractérisé en ce qu'**une ligne de mesure modifiée moyenne (66) est déterminée en utilisant la première et la deuxième ligne de mesure modifiée (42', 44'), et **en ce que** les valeurs de correction dépendantes de la position sont fournies en fonction de la ligne de mesure modifiée moyenne (66).

5. Procédé selon la revendication 3 ou 4, **caractérisé en ce que** la première et la deuxième pluralité d'angles de flexion élastique est fournie (68) afin d'effectuer une précorrection élastique (86) d'une valeur de mesure de position de la tête de mesure.

6. Procédé selon l'une des revendications 1 à 5, **caractérisé en ce que** le bâti coulissant (12, 14, 24) présente un troisième axe de déplacement (17) le long duquel peut être déplacée la tête de mesure (30), et **en ce qu'**une troisième et une quatrième ligne de mesure (46, 48) est enregistrée, lesquelles s'étendent parallèlement à la première et à la deuxième ligne de mesure (42, 44), mais sont toutefois décalées en direction du troisième axe de déplacement (17).

7. Procédé selon l'une des revendications 1 à 6, **caractérisé en ce que** les lignes de mesure (42 - 48) sont enregistrées avec une première distribution des cotes définies et **en ce qu'**un facteur de correction dépendant des cotes est fourni en fonction de la première distribution des cotes afin de corriger les valeurs mesurées des positions.

8. Procédé selon l'une des revendications 1 à 7, **caractérisé en ce que** l'appareil de mesure de coordonnées (10) est un appareil de mesure à bras horizontal comprenant une base (12), une colonne (14) montée sur celle-ci et un bras (24) monté sur la colonne (14), et **en ce que** la première et la deuxième ligne de mesure (42, 44) est enregistrée

**EP 1 750 088 B1**

sous la forme de lignes de mesure zRx(y), le bras (24) étant déplacé verticalement le long d'un axe z (21) et chaque ligne de mesure zRx(y) contenant des erreurs de guidage rotatoires autour d'un axe x (17) le long duquel la colonne (14) peut être déplacée sur la base (12), la première et la deuxième position transversale étant différente positions du bras (24) le long d'un axe y (28) le long duquel le bras (24) peut être déplacé horizontalement sur la colonne (14).

9. Procédé selon la revendication 8, **caractérisé en ce que** la première et la deuxième ligne de mesure (42, 44) est tout d'abord enregistrée et **en ce qu'**une ligne de mesure yRx avec les valeurs erronées yRx est ensuite enregistrée, les valeurs erronées yRx étant modifiées en fonction de la première pluralité d'angles de flexion élastique $\xi(z)$ et les valeurs erronées yRx étant les erreurs de guidage rotatoires autour de l'axe x (17) lors du déplacement du bras (24) le long de l'axe y (28).

10. Procédé selon l'une des revendications 1 à 7, **caractérisé en ce que** l'appareil de mesure de coordonnées est un appareil de mesure à portique comprenant un portique avec une traverse et un chariot monté sur la traverse, et **en ce que** la première et la deuxième ligne de mesure (42, 44) est enregistrée sous la forme de lignes de mesure yRx (x), lesquelles contiennent les erreurs de guidage rotatoires autour d'un axe x lors du déplacement le long d'un axe y, l'axe x indiquant la position du chariot sur la traverse et l'axe y étant l'axe de déplacement pour le portail.

11. Programme informatique comprenant un code de programme qui est configuré pour exécuter un procédé selon l'une des revendications 1 à 10 lorsque le programme est exécuté sur une unité d'interprétation d'une machine selon la revendication 12, le code de programme contenant toutes les étapes du procédé.

12. Machine, notamment appareil de mesure de coordonnées comprenant un bâti coulissant (12, 14, 24) avec au moins deux axes de déplacement (17, 21, 28), comprenant une tête de mesure ou de travail (30) qui est montée sur le bâti coulissant (12, 14, 24), et comprenant une unité d'interprétation (34) pour corriger les erreurs de guidage avec une mémoire (38) dans laquelle est enregistrée une pluralité de valeurs erronées, lesquelles représentent les erreurs de guidage translatoires et rotatoires du bâti coulissant (12, 14, 24) le long des au moins deux axes de déplacement (17, 21, 28), **caractérisée en ce que** les valeurs erronées représentent au moins une première ligne de mesure modifiée (42'), laquelle est indépendante d'une position transversale du bâti coulissant (12, 14, 24), ainsi qu'une première pluralité d'angles de flexion élastique $\xi(z)$, lesquels représentant une dépendance à la position transversale de la première ligne de mesure modifiée (42'), l'unité d'interprétation (34) étant configurée pour fournir des valeurs de correction dépendants de la position pour une position de la tête de mesure ou de travail (30) en fonction des valeurs erronées respectives qui représentent la première ligne de mesure modifiée (42') afin de corriger une valeur de position de la tête de mesure ou de travail (30).

Fig.1

EP 1 750 088 B1

Fig.2

Fig.3

15

46

48

$\varphi_3(x_1, y_1, z)$

$\varphi_2(x_1, y_0, z)$

x

$\varphi_{03}(x, y_1, z)$

$\varphi_{12}(x, y_0, z)$

$\varphi(x, y, z)$

44''

$\varphi_0(x_0, y_1, z)$

$\varphi_1(x_0, y_0, z)$

y

42''

**Fig.4**

50

$\xi$

$\xi_0$

0

$z_0$

z

y

$y_0$

$\varphi_0$

$\xi_0$

0

$z_0$

z

**Fig.5**

56

Aufnehmen zRx(y1)

58

Aufnehmen zRx(y2)

60

Biegewinkel bestimmen

Neue X-Position

64

62

zRx(y1)/zRx(y2) von
Biegewinkeln befreien

Mittlere zRx-Linie bestimmen
und abspeichern

66

Äquivalente Drehwinkel
bestimmen und abspeichern

68

Restliche 17 Messlinien
aufnehmen und abspeichern

70

Massedaten abspeichern

72

# Fig.6

Massedaten einlesen — 74

Korrekturfaktor bestimmen — 76

Korrigierte Biegewinkel bestimmen — 78

Querpositionsunabhängige yRx-Messlinie bestimmen — 80

Querpositionsunabhängige xRx-Messlinie bestimmen — 82

Messwertaufnahme — 84

Vorkorrektur anhand äquivalenter Drehwinkel — 86

Standard CAA — 88

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4939678 A
- US 4819195 A
- DE 10214490 A1
- DE 19518268 A1
- EP 0684447 A2

**In der Beschreibung aufgeführte Nicht-Patentliteratur**

- **K. BUSCH.** Ein Beitrag zur Bestimmung der Messunsicherheit von Koordinatenmessgeräten. *PTB-Bericht PTB-ME-38,* 1983, 33 ff